# EUROPÄISCHE PATENTSCHRIFT

(11) **EP 0 417 417 B1**
(45) Veröffentlichungstag und Bekanntmachung des Hinweises auf die Patenterteilung: **03.11.1993**
(21) Anmeldenummer: 90112915.5
(22) Anmeldetag: 06.07.1990
(51) Int. Cl.: B60B 33/02

(54) **Zwillingsrolle, insbesondere Lenkrolle**
Dual wheels, especially castors
Roulettes jumelées, notamment roulettes à pivot

(30) Priorität: 11.09.1989 DE 8910890 U
(43) Veröffentlichungstag der Anmeldung: 20.03.1991
(73) Patentinhaber: TENTE-ROLLEN GmbH & Co., D-42929 Wermelskirchen (DE)
(72) Erfinder: Milbredt, Manfred, D-5630 Remscheid (DE); Block, Wolfgang, D-5830 Schwelm (DE)
(74) Vertreter: Rieder, Hans-Joachim, Dr.

(56) Entgegenhaltungen:
- GB-A- 2 172 499
- GB-A- 2 195 237
- US-A- 4 184 227

## Beschreibung

Die Erfindung bezieht sich auf eine Zwillingsrolle, insbesondere Lenkrolle, gemäß Gattungsbegriff des Anspruches 1.

Eine derartige Zwillingsrolle ist bekannt aus der US-PS 4 677 706, wobei der sich zwischen den Laufrädern erstreckende Träger als Spritzgußteil ausgebildet ist. An der Unterseite desselben ist ein blattfederartig gestaltetes Bremselement festgeschraubt, dessen freies Ende mit einer Verzahnung eines im Montagezapfen längsverschieblich geführten Bremsstößels zusammenwirkt. Bei einer Aufwärtsverlagerung des Bremsstößels tritt das Bremselement in Zahneingriff zur Verzahnung des Bremsstößels. Ferner wird das Bremselement in Bremsanlage zu den Laufrädern gebracht. Diese Ausgestaltung ist kompliziert in ihrem Aufbau. Ferner ist sie wenig geeignet, große Kräfte schadfrei auszunehmen.

Dem Gegenstand der Erfindung liegt die Aufgabe zugrunde, eine Zwillingsrolle der in Rede stehenden Art in herstellungstechnisch einfacher Weise so auszugestalten, daß neben einem vereinfachten Aufbau und erleichterter Montage hohe Bremskräfte schadfrei aufnehmbar sind.

Gelöst wird die Erfindungsaufgabe durch die im Anspruch 1 angegebene Erfindung.

Die Unteransprüche stellen vorteilhafte Weiterbildungen der erfinderischen Lösung dar.

Zufolge derartiger Ausgestaltung ist eine gattungsgemäße Zwillingsrolle, insbesondere Lenkrolle, bei einfachem Aufbau von erhöhtem Gebrauchswert angegeben. Als Träger dient nun ein ausschließlich scheibenförmig gestaltetes, kostensparend herzustellendes Bauteil. Werkzeuglos ist diesem das als Bremsstempel ausgebildete Bremselement zuordbar, und zwar im Wege einer Steck-Hintergriffsverbindung. Diese wird in der Weise herbeigeführt, daß vorerst der Bremsstempel von der Seite her in die Durchbrechung des scheibenförmigen Trägers eingesteckt wird. Dann erfolgt eine hierzu quergerichtete Verlagerung unter Erzielung des Hintergriffs, so daß danach der Bremsstempel unverlierbar am Träger festgelegt ist. Der Bremsstempel ist selbst stabil ausgelegt und vermag hohe Bremskräfte schadfrei zu übertragen. Zum Angriff des Bremsstempels an den Laufrädern dienen die an dem Bremsstempel seitlich auskragenden Bremsbacken. Diese können materialeinheitlich mit dem Bremsstempel gestaltet sein. Sobald der Bremsstempel freigegeben wird, bringt ihn die sich an der unteren Begrenzungswand des Durchbruchs abstützende Druckfeder in Freigabestellung zurück. Es liegen demnach genau definierte Endstellungen vor. Zwecks Erzielung des Einbaues des Bremsstempels im Wege der Steck-Hintergriffsverbindung sind an dem Durchbruch seitliche Führungsnasen ausgebildet, die im Einbauzustand mit Halterungsnasen in formschlüssiger Überdeckung sind. Der Bremsstempel ist so beschaffen, daß in gleicher Funktionsweise wie bei der DE 31 19 649 C2 eine Brems- und Schwenkblockierung der Laufrolle vorgenommen werden kann. Dies geschieht mittels des im Montagezapfen geführten Betätigungsstößels. Hierzu ist die obere Stirnfläche des Bremsstempels und die untere Stirnfläche des Stößels zur Schwenkblockierung verzahnt ausgebildet. Die Steuerung des Betätigungsstößels kann so sein, daß vorerst eine Schwenkblockierung erreicht wird. Dann greifen lediglich die Verzahnungen ineinander. Der Bremsstempel wird jedoch noch nicht in Bremsanlage zu den Laufrädern gezwungen. Bei weiterer Verlagerung des Betätigungsstößels wird dann noch zusätzlich die Bremsblockierung des Laufrades herbeigeführt. Es ist jedoch auch möglich, ausschließlich nach einer Verlagerung des Betätigungsstößels sowohl die Brems- als auch Schwenkblockierung herbeizuführen. Gebrauchstechnische Vorteile ergeben sich dadurch, daß die Laufräder an ihren einander zugewandten Innenseiten abgestufte Bremsflächenringe ausbilden. Diese wirken dann mit den Bremsbacken zusammen. Eine weitere Funktion erfüllt der Träger dadurch, daß auf ihn eine Abdeckung auf steckbar ist. Von dieser unterseitig ausgehende Halterungsvorsprünge treten entlang einer Umfangslinie beidseitig gegen den im wesentlichen kreisförmig ausgebildeten Träger und sichern dadurch die Abdeckung in Querrichtung. Die Festlegung ist so stabil, daß kein Kontakt zwischen den Laufrädern und der Abdekkung auftreten kann. Ferner schützt die Abdeckung die Lenkrolle vor Verschmutzung. Diese Abdeckung setzt sich in eine den Montagezapfen umgebende Hülse fort und ist so aufgebaut, daß sie eine Montagezapfen-Verkleidung aufnehmen kann. Letzteres geschieht ebenfalls im Wege der Steckverbindung, wozu die Hülse entsprechende Einstecknuten formt. Diese Maßnahme erlaubt es, unterschiedlich gestaltete Montagezapfen-Verkleidungen in einfacher Weise der Zwillingsrolle zuzuordnen. Beispielsweise kann die Montagezapfen-Verkleidung sich in ein die Laufräder überfangendes Schutzblech fortsetzen. Ferner sind solche Verkleidungen in einfacher Weise auf steckbar, die als Adapter zu entsprechenden Fahrgestellen dienen. Ein erleichtertes Zusammenstecken ist gegeben, wenn die Einstecknuten senkrecht verlaufen. Sodann ist der Träger selbst zur Halterung der Achse herangezogen. Als Achse dient eine Hülse, deren über den scheibenförmigen Träger vorstehende Abschnitte über Wälzlager die Laufräder abstützen. Zum Einbauen der Hülse dient eine Montageöffnung in der äußeren Laufradwand. Zum Schutz der Lagerstelle vor Verschmutzung, Fäden etc. dient der radial gerichtete Verschlußdeckel. Dieser ist zweifach gesichert. Zu diesem Zweck besitzt er einen zentralen und einen hierzu radial versetzten Klipskragen, die in entsprechende Klipsverbindung zur Laufradwand treten. Die doppelte Sicherung des Verschlußdeckels schafft eine stabile Zuordnung zur Laufradwand. Als optisch- und gebrauchsgünstig erweist es sich, wenn der Verschlußdekkel ebenflächig in die äußere Laufradwand übergeht. Letztere formt ein Felgenbett zur Aufnahme des Laufflächenringes. Einstückig mit diesem ist der Bremsflächenring geformt unter Ausbildung einer Stufe. Eine Abnutzung des Laufflächenringes beeinflußt daher nicht die Bremswirkung. Da vornehmlich für den Laufflächenring flexibles Material wie Gummi bzw. entsprechender Kunststoff gewählt ist, erhält auch der Bremsflächenring günstige Voraussetzungen für das Zusammenwirken mit dem Bremsstempel bzw. dessen Bremsbacken. Eine hohe Lagenstabilität des Laufflächenringes mit angeformtem Bremsflächenring wird dadurch erzielt, daß die Bodenfläche des Felgenbettes konisch, sich nach außen vergrößernd verläuft.

Nachstehend werden zwei Ausführungsformen der Erfindung anhand von Zeichnungen erläutert. Es zeigt
- Fig. 1: eine Ansicht einer Zwillingsrolle gemäß der ersten Ausführungsform,
- Fig. 2: den Schnitt nach der Linie II-II in Fig. 1,
- Fig. 3: den Schnitt nach der Linie III-III in Fig. 2,
- Fig. 4: den Schnitt nach der Linie IV-IV in Fig. 3,
- Fig. 5: den Schnitt nach der Linie V-V in Fig. 3,
- Fig. 6: in Einzeldarstellung eine Ansicht des Laufflächenringes, von der Außenseite her gesehen,
- Fig. 7: den Schnitt nach der Linie VII-VII in Fig. 6,
- Fig. 8: in Einzeldarstellung eine Ansicht des Verschlußdeckels,
- Fig. 9: den Schnitt hierzu gemäß Linie IX-IX in Fig. 8,
- Fig. 10: eine Rückansicht des Verschlußdeckels, unter Veranschaulichung der Klipskragen,
- Fig. 11: in perspektivischer Darstellung den Bremsstempel mit Zahnscheibe,
- Fig. 12: einen teilweisen Längsschnitt durch die Lenkrolle auf Höhe des Bremsflächenringes bei in Freigabestellung befindlichen Bremsbacken,
- Fig. 13: eine der Fig. 12 entsprechende Darstellung, jedoch bei in Wirkung zur Bremsringfläche getretenem Bremsstempel und
- Fig. 14: eine Ansicht der Zwillingsrolle gemäß dem zweiten Ausführungsbeispiel, wobei sich die Montagezapfen-Verkleidung in ein die Laufräder überfangendes Schutzblech fortsetzt.

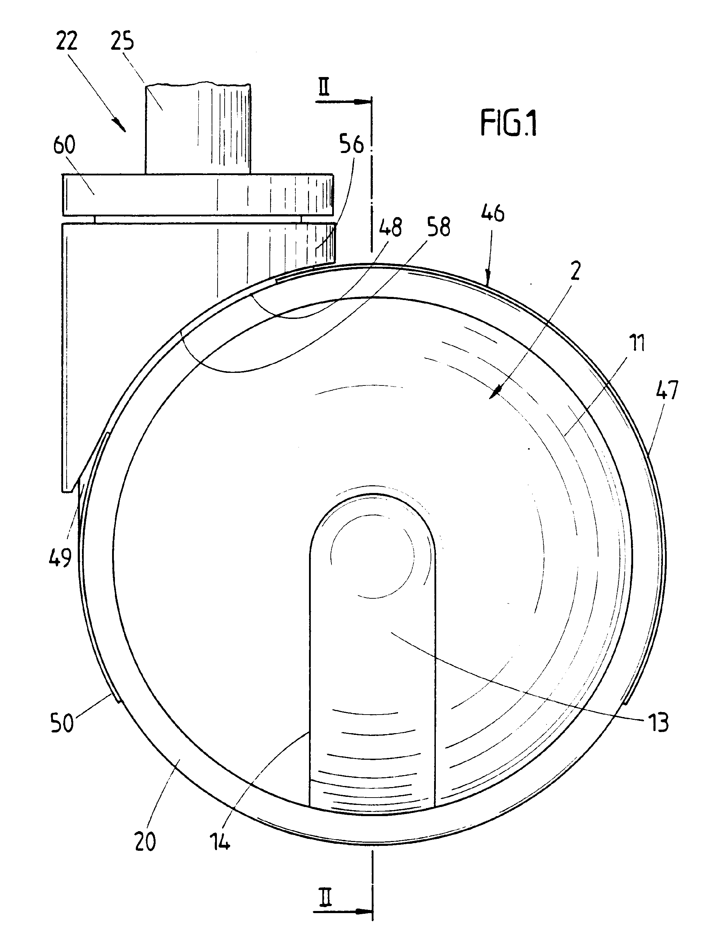

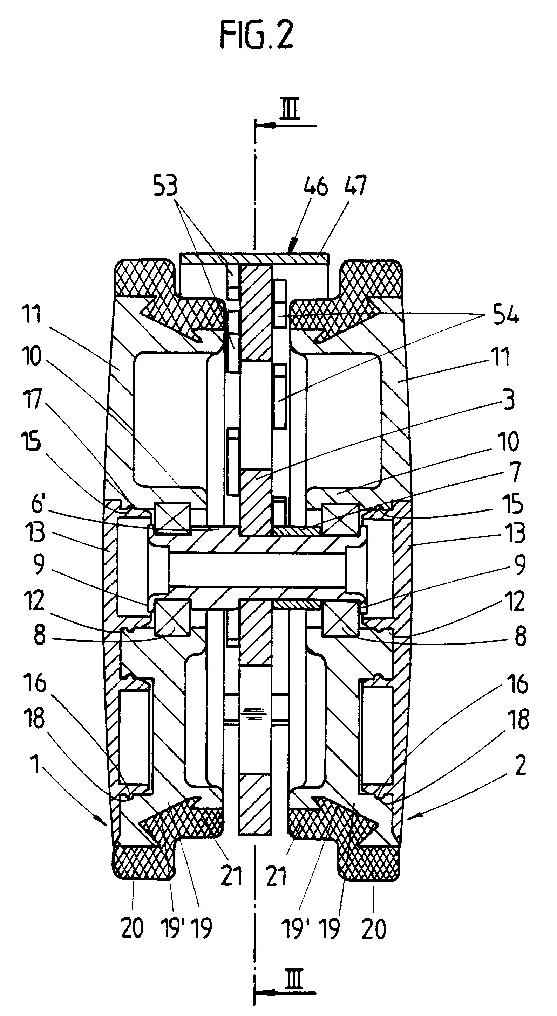

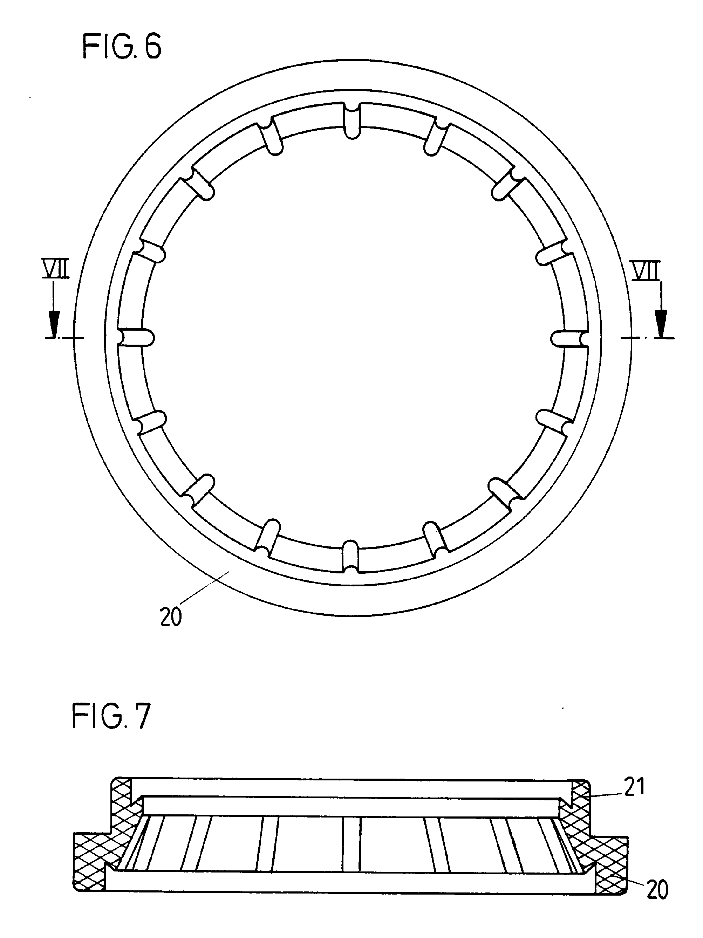

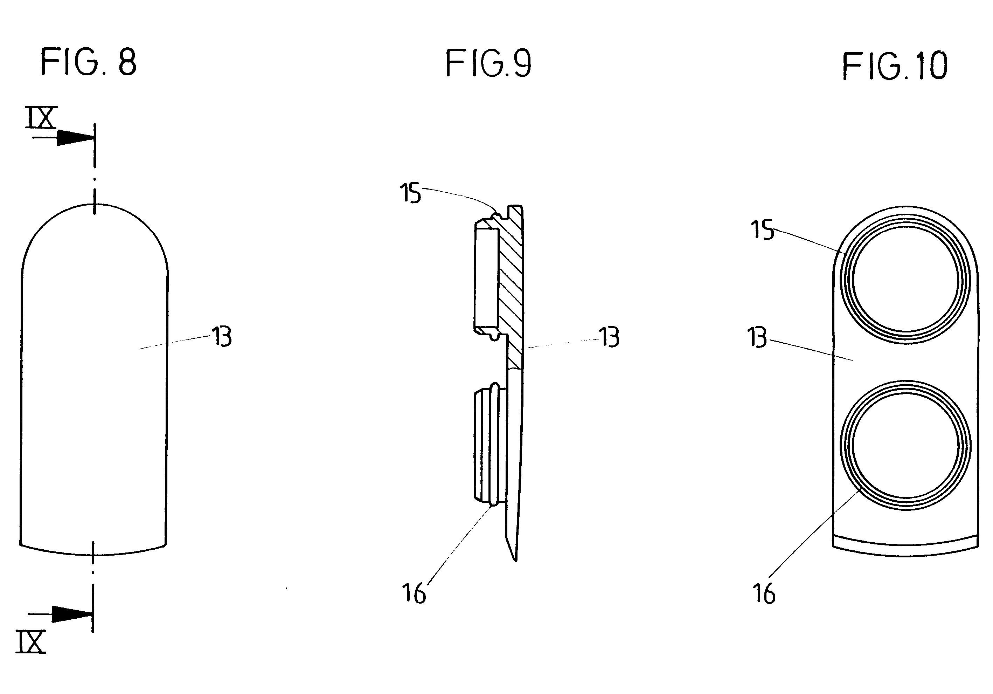

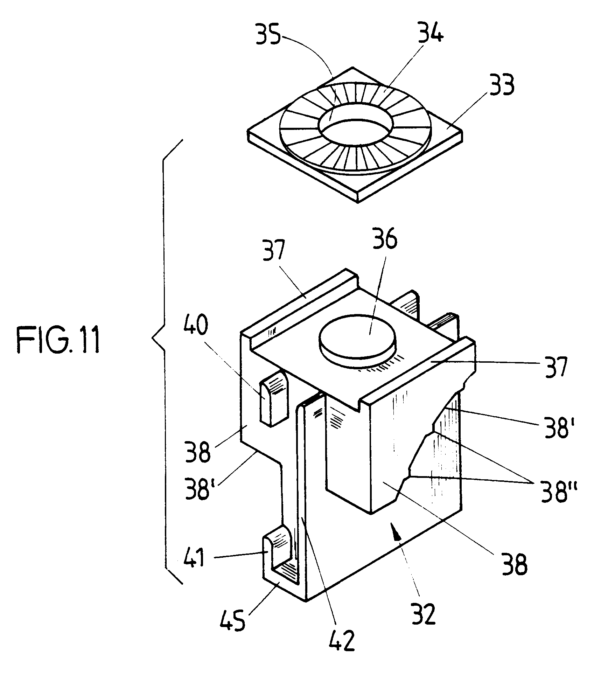

Die Zwillingsrolle gemäß der ersten Ausführungsform, dargestellt in den Fig. 1 - 13, besitzt einen scheibenförmig gestalteten, sich zwischen beiden Laufrädern 1, 2 erstreckenden Träger 3. Letzterer ist im wesentlichen kreisförmig gestaltet. Der größte Durchmesser des scheibenförmigen Trägers 3 ist geringer als der Außendurchmesser der Laufräder 1, 2. Der untere Bereich des Trägers 3 ist stufenförmig abgesetzt und verläuft ebenfalls auf einer kreisförmigen Bogenlinie geringeren Durchmessers. Die entsprechenden Stufen sind mit 4 und 5 bezeichnet.

In zentraler Anordnung nimmt der Träger 3 eine Achse auf, die beim Ausführungsbeispiel als Hülse 6 ausgebildet ist. Letztere sitzt undrehbar in dem Träger 3 und stützt sich mit einem querschnittsgrößeren Kragen 6' an der einen Seitenfläche des Trägers 3 ab. Anstelle eines Kragens ist auf der gegenüberliegenden Seite des Trägers 3 eine Büchse 7 auf die Hülse 6 aufgesteckt. Jedes Hülsenende trägt ein sich am Kragen 6' bzw. an der Hülse 7 abstützendes Wälzlager 8, welches durch eine endseitige Umbördelung 9 der Hülse 6 in axialer Richtung fixiert ist.

Die Wälzlager 8 werden von einer zentralen, einwärts gerichteten Nabe 10 einer äußeren, leicht ballig verlaufenden Laufradwand 11 aufgenommen. Um die Umbördelung 9 an den Hülsenenden erzeugen zu können, ist in jeder Laufradwand 11 eine Montageöffnung 12 vorgesehen, welche durch einen radial gericheten Verschlußdeckel 13 abgedeckt ist. Für diesen bildet die Laufradwand 11 eine radiale Aussparung 14 aus derart, daß der Verschlußdekkel 13 ebenflächig in die äußere Laufradwand 11 übergeht. Zur Halterung des Verschlußdeckels 13 dient ein zentraler Klipskragen 15 und ein hierzu radial versetzter Klipskragen 16, die mit Gegenklipsnuten 17, 18 der Laufradwand 11 zusammenwirken.

Jede Laufradwand 11 formt ein Felgenbett 19 zur Aufnahme eines aus flexiblem Material wie Gummi etc. bestehenden Laufflächenringes 20. Einstückig von diesem geht unter Ausbildung einer Stufe ein durchmesserkleinerer Bremsflächenring 21 aus. Die Lauffläche und Bremsfläche verlaufen etwa parallel zur Radachse. Ferner besitzen der Laufflächenring 20 und der Bremsflächenring 21 etwa gleiche Länge. Die Bodenfläche 19' des Felgenbettes 19 verläuft konisch derart, daß sie sich nach außen hin vergrößert. Sodann ist das Felgenbett 19 mit Hinterschneidungen versehen, in welche formpassend Vorsprünge des Laufflächenringes 20 eingreifen und somit diesen unverlierbar am Felgenbett 19 haltern.

Im oberen Bereich des kreisförmigen Trägers 3 wird durch eine an ihn gelegte vertikale und horizontale Tangente ein Winkel 3' gebildet. Der horizontale Schenkel desselben dient zur Festlegung eines mit 22 bezeichneten Montagezapfens. Dieser besitzt eine an dem oberen Winkelschenkel durch Schweißen festgelegte Lagerschale 23, welche ein Wälzlager 24 aufnimmt. Letzteres umfaßt das untere Ende einer Einsteckhülse 25. Zwecks axialer Unverschieblichkeit bildet die Einsteckhülse 25 oberhalb des Wälzlagers 24 einen Kragen 26 aus. Das untere Ende 27 der Einsteckhülse ist umgebördelt und untergreift das Wälzlager 24 an dessen Unterseite. Zwischen dem Kragen 26 und der oberen Seite des Wälzlagers erstreckt sich sodann noch ein Abdeckring 28. Durch vorgenannte Ausgestaltung kann der Träger 3 mit seinen an ihm gelagerten Laufrädern 1, 2 um eine vertikale Achse schwenken. Die Einsteckhülse 25 ihrerseits wird in ein nicht dargestelltes Aufnahmeteil eines Fahrgestells eingebaut.

Mittig ist in der Einsteckhülse 25 längsverschieblich, jedoch undrehbar ein Betätigungsstößel 29 geführt. Die Undrehbarkeit erhält dieser durch beidseitige Abflachungen.

Das untere Ende des von einer nicht dargestellten Feder in Aufwärtsrichtung beaufschlagten Betätigungsstößels 29 ist zu einer radial ausladenden Stößelplatte 30 geformt. Deren untere Stirnfläche ist mit einer Verzahnung 31 versehen. Zur Steuerung des Stößels 29 kann ein nicht veranschaulichter, hebelbetätigbarer Nocken dienen.

Der vorgenannten Verzahnung 31 liegt die obere Stirnfläche eines Bremsstempels 32 gegenüber. Gebildet ist die obere Stirnfläche von einer quadratischen Scheibe 33 mit einem kreisförmigen, in Richtung des Stößels 29 vorstehenden Zahnkranz 34. In eine zentrale Bohrung 35 der Scheibe 33 ragt ein stirnseitiger Zapfenabschnitt 36 des Bremsstempels 32 hinein. Eine Drehsicherung erhält die Scheibe 33 durch zwei sich diametral gegenüberliegende Stege 37, die bei eingebautem Bremsstempel 32 parallel zur Ebene des scheibenförmigen Trägers 3 verlaufen. Die vorgenannten beiden Stege 37 befinden sich an von den Breit seiten des Bremsstempels ausladenden Bremsbacken 38, die die zugekehrten Bremsflächenringe 21 übergreifen.

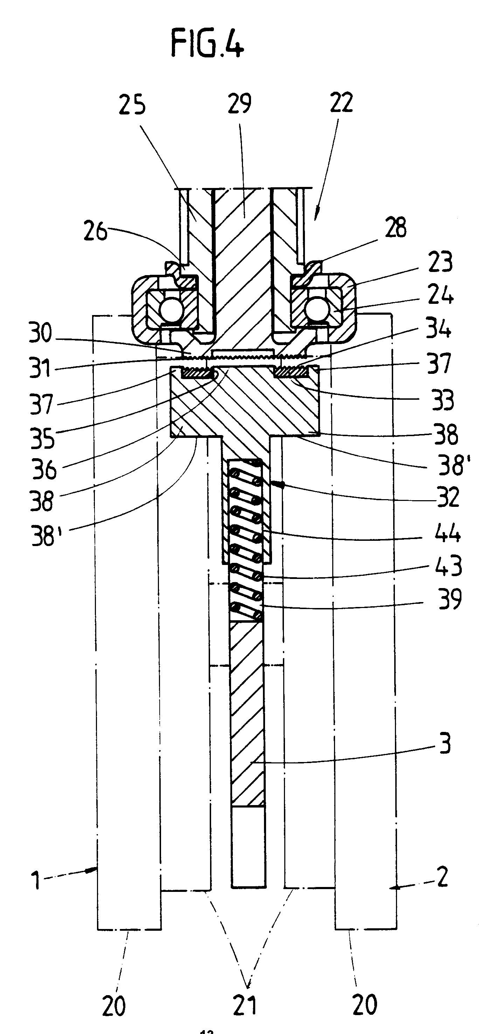

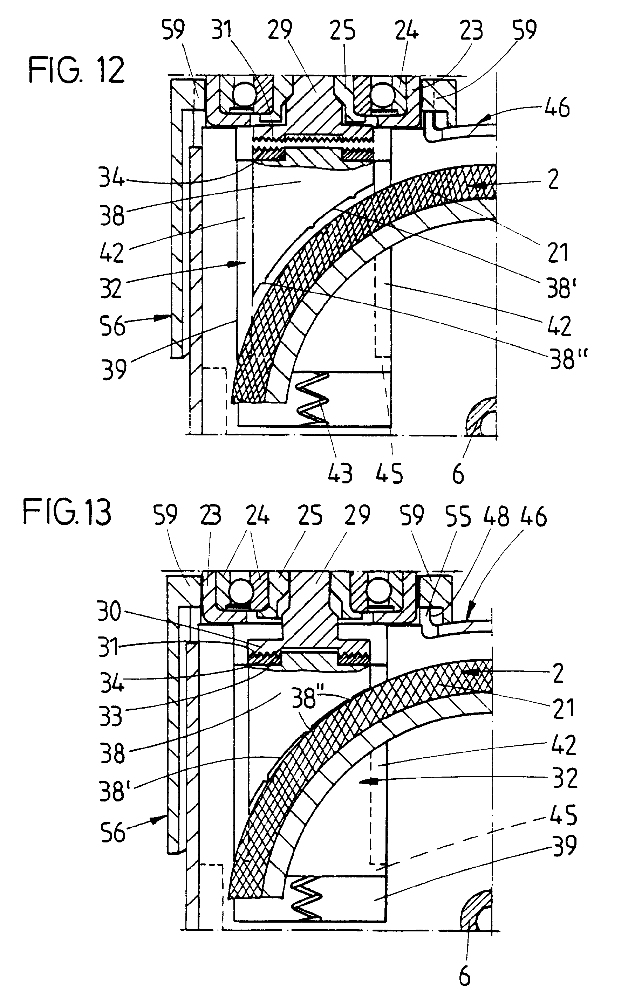

Der Bremsstempel 32 sitzt verschiebbar in einer Durchbrechung 39 des Trägers 3. Letztere erstreckt sich unterhalb des Stößels 29 und geht von dem oberen Winkelschenkel des Winkels 3' aus. Der Bremsstempel 32 wird von der einen Seite des scheibenförmigen Trägers 3 eingesetzt und gelangt anschließend durch quergerichtete Verlagerung in einen Hintergriff unter Erzielung einer Steck-Hintergriffsverbindung. Zur Erzielung derselben ragen in den Durchbruch 39 seitliche Nasen 39', 39'' hinein, die im Einbauzustand mit Halterungsnasen 40, 41, 42 in formschlüssiger Überdeckung sind. Im einzelnen sieht dies so aus, daß während des Einsteckens die Halterungsnasen 40, 41 in die durch die Führungsnasen 39', 39'' gebildeten Nischen eintauchen. Begrenzt wird die Einsteckbewegung durch die auf ganzer Länge des Bremsstempels 32 durchgehende Halterungsnase 42. Danach hat die Querverlagerung des Bremselementes bzw. Bremsstempels 32 in Aufwärtsrichtung zu erfolgen, wobei die Halterungsnasen 40, 41 in den Hintergriff zu den seitlichen Führungsnasen 39' des Durchbruchs 39 treten. Diese Hintergriffsstellung wird aufrechterhalten durch eine Druckfeder 43, die in ein bodenseitiges Sackloch 44 des Bremsstempels 32 eingreift und die sich an einer unteren Begrenzungswand 39''' des Durchbruchs 39 abstützt. Die Anschlagbegrenzung des Bremsstempels 32 wird erzielt durch den unteren Verbindungssteg 45 zwischen den jeweils sich gegenüberliegenden Halterungsnasen 41, 42, welcher Steg 45 sich an den zugekehrten Führungsnasen 39' absützt. Die anschlagbegrenzte Position des Bremsstempels 32 ist die Freigabestellung, in welcher die kokav verlaufenden Bremsflächen 38' mit geringem Abstand zu den Bremsflächenringen 21 liegen, vgl. Fig. 4 und 12. Zur Verstärkung eines Bremseffektes bilden die Bremsbacken 38 querverlaufende Bremsrippen 38'' aus.

Dem Träger 3 ist eine aufsteckbare Abdeckung 46 zugeordnet. Diese greift mit einem kreisbogenförmig verlaufenden Abschnitt 47 zwischen die Laufflächenringe 20 und übergreift dabei die Bremsflächenringe 21. Der Abschnitt 47 erstreckt sich über einen Winkel von etwa 120° und besitzt einen Innenradius, der dem Außenradius des Trägers 3 im entsprechenden Bereich angepaßt ist. Das obere Ende des Abschnittes 47 geht von einer den Montagezapfen 22 umgebenden Hülse 48 aus. Im Detail sieht dies so aus, daß die Hülse 48 die Lagerschale 23 formschlüssig umfaßt und somit die Abdeckung 46 im dortigen Bereich zentrierend fixiert. Diese Hülse 48 setzt sich an der dem Abschnitt 47 gegenüberliegenden Seite in einen vertikal ausgerichteten Abschnitt 49 fort, der in einen kurzen bogenförmigen Endabschnitt 50 übergeht. Sowohl der Abschnitt 49 als auch der Endabschitt 50 liegen an der Außenkontur des Trägers an. Ferner formen sowohl der Endabschnitt 50 als auch das freie Ende des Abschnittes 47 einwärtsgerichete Rastschultern 51, 52, welche die Stufen 4, 5 des Trägers 3 in der Endphase der Aufsteckbewegung der Abdeckung 46 hintergreifen. Der Abstand zwischen den Rastvorsprüngen 51, 52 ist kleiner als der maximale Durchmesser des Trägers 3. Das bedeutet, daß während der Aufsteckbewegung die Abschnitte 47, 49 federnd ausweichen, wozu für die Abdeckung entsprechendes Material gewählt ist.

An dem Abschnitt 47 sind unterseitig Halterungsvorsprünge 53, 54 angeformt. Diese treten entlang einer Umfangslinie beidseitig gegen die Seitenflächen des Trägers 3 derart, daß die einen Halterungsvorsprünge 53 sich auf der einen und die anderen Halterungsvorsprünge 54 sich auf der anderen Seite des Trägers 3 befinden. Auf diese Weise wird der Abschnitt 47 der Abdeckung 46 gegen Querverlagerung zum Träger 3 gesichert.

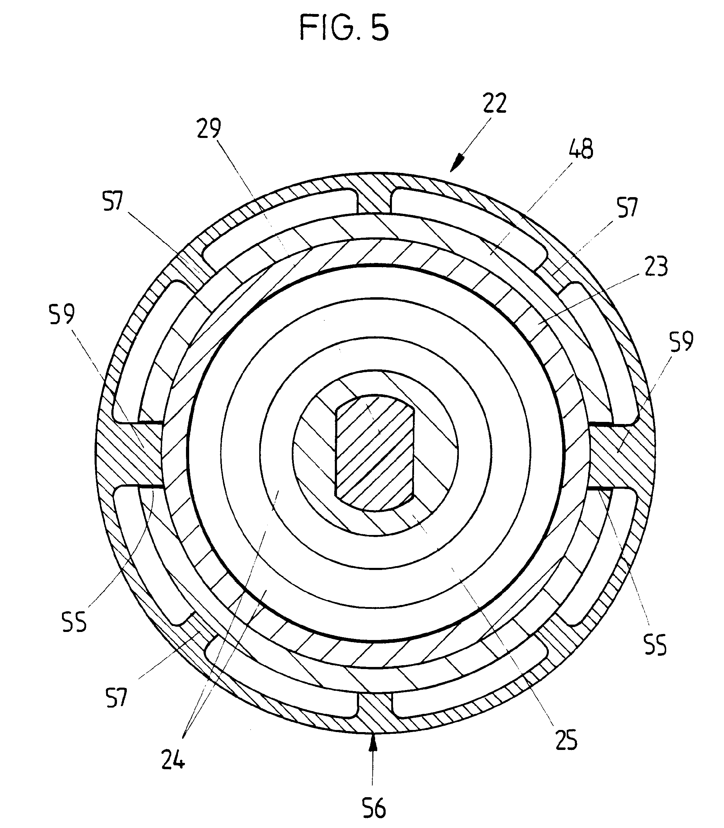

Die vorerwähnte, den Montagezapfen umgebende Hülse 48 formt diametral sich gegenüberliegende Einstecknuten 55 zur Halterung einer Montagezapfen-Verkleidung 56. Dieselbe ist büchsenförmig gestaltet mit einem Durchmesser, der größer ist als derjenige der Hülse 48. In radialer Richtung einwärtsweisende Distanzstege 57 der Verkleidung treten gegen die Umfangsfläche der Hülse 48 und zentrieren damit die Montagezapfen-Verkleidung. Der untere Stirnrand der büchsenförmigen Montagezapfen-Verkleidung verläuft konzentrisch zu den Laufflächenringen 20. Eine Drehsicherung erhält die Montagezapfen-Verkleidung dadurch, daß von ihr einwärtsgerichtete Radialstege 59 ausgehen, die formpassend in die senkrecht verlaufenden Einstecknuten 55 eintauchen, vgl. insbesondere Fig. 5. Die Steckverbindung erfolgt vorzugsweise reibungsschlüssig, so daß die Verkleidung sicher gehalten ist. Gegebenenfalls könnte eine Sicherung noch durch einen Steckstift, Schraube etc. erfolgen.

Überfangen ist die Montagezapfen-Verkleidung von einem auf die Einsteckhülse 25 aufgesetzten Abdeckring 60.

Es stellt sich folgende Wirkungsweise ein:

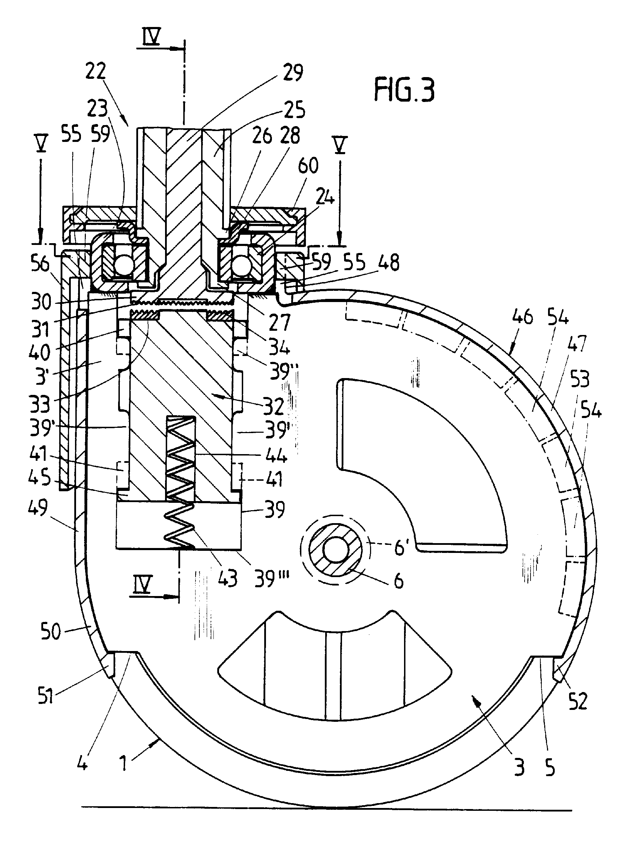

Gemäß Fig. 3 und 12 befindet sich der Bremsstempel 32 in der Freigabestellung. Dies trifft auch auf den Betätigungsstößel 29 zu. Soll eine Brems- und Schwenkblockierung erfolgen, so wird durch Handhebelbetätigung der Stößel 29 in Abwärtsrichtung entgegen der ihn belastenden Feder verlagert. Die Verzahnung 31 der Stößelplatte 30 tritt ganzflächig auf einer geschlossenen Kreisringfläche in Eingriff zum Zahnkranz 34 des Bremsstempels 32. Einhergehend wird der Bremsstempel 32 in Abwärtsrichtung bewegt, wobei die Bremsflächen 38' der Bremsbacken 38 in innigen Kontakt zu den Bremsflächenringen 21 der Laufräder 1, 2 treten. Diese Ausgestaltung läßt es zu, daß hohe Bremskräfte schadfrei übertragen werden können.

Soll die Freigabestellung herbeigeführt werden, so ist der Bremsstößel 29 in entgegengesetzte Richtung zu verlagern. Dessen Verzahnung 31 entfernt sich von dem Bremsstempel 32. Auch dieser kann zufolge seiner Druckfederbeaufschlagung um einen gewissen Betrag in Aufwärtsrichtung bis in die Anschlagstellung fahren unter Lüftung der Bremsbacken 38 von den Bremsflächenringen 21.

Es ist eine solche Steuerung des Stößels 29 möglich, daß nach einer Teilverlagerung ausschließlich eine Schwenkblockierung der Zwillingsrolle erfolgt. Der Träger 3 mit den Laufrädern 1, 2 kann dann nicht um die vertikale Achse geschwenkt werden. Nur die Laufräder 1, 2 vermögen um ihre Achse zu drehen. Nach einer weiteren Verlagerung des Stößels 29 wird dann die zuvorbeschriebene Brems- und Schwenkblockierung erzeugt.

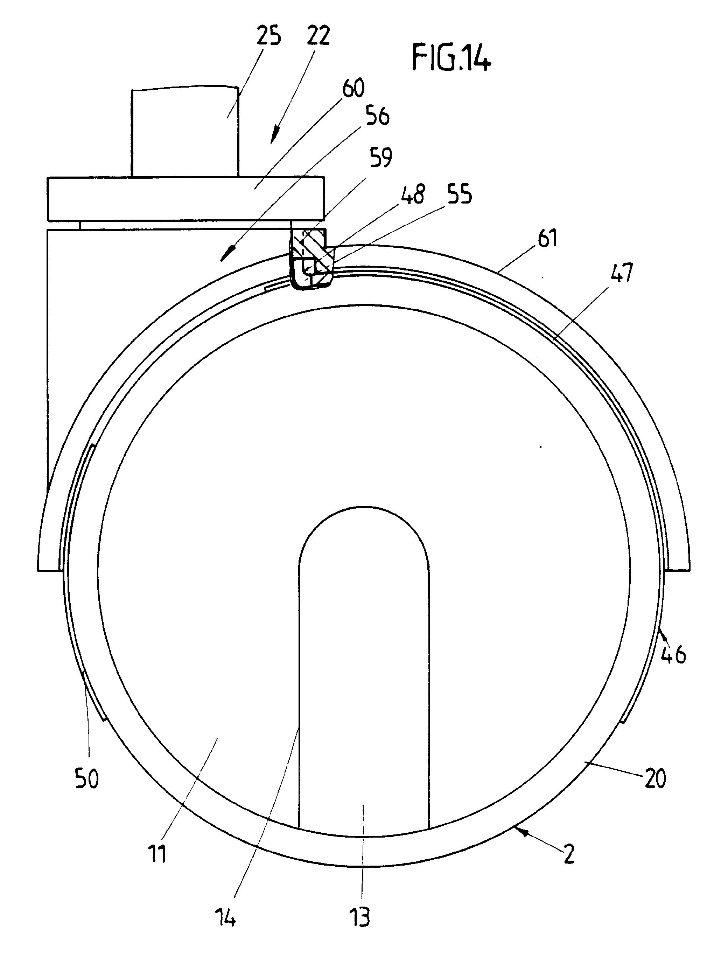

Die in Fig. 14 veranschaulichte, zweite Ausführungsform entspricht weitgehend der ersten Ausführungsform. Daher sind gleiche Bauteile mit gleichen Bezugsziffern versehen. Abweichend von der ersten Ausführungsform trägt die Montagezapfen-Verkleidung 56 ein auch die Laufräder 1, 2 überfangendes Schutzblech 61. Letzteres und die Verkleidung 56 stellen somit ein zusammenhängendes Bauteil dar, welches ebenfalls im Wege der Steckverbindung angesetzt werden kann.

Weitere Bauformen sind möglich, welche beispielsweise als Adapter zwischen einen Fahrgestell und der Zwillingsrolle dienen. Das Ansetzen dieser Adapterteile an die Hülse 48 erfolgt ebenfalls im Wege der Steckverbindung.

## Patentansprüche

1. Zwillingsrolle, insbesondere Lenkrolle, mit einem Träger (3), Laufrädern (1, 2) und einem hochstehenden Montagezapfen (22), wobei die Laufräder (1, 2) über eine Achse (6) an dem Träger (3) gehaltert sind und der Träger (3) den Montagezapfen (22) abstützt und wobei weiter an dem Träger (3) ein Bremselement (32) angeordnet ist, dadurch gekennzeichnet, daß der Träger (3) scheibenförmig gestaltet ist und eine Durchbrechung (39) zum seitlichen Einsatz in Form einer Steck-Hintergriffsverbindung für das als Bremsstempel (32) ausgebildete Bremselement aufweist.

2. Zwillingsrolle, insbesondere nach Anspruch 1, dadurch gekennzeichnet, daß an dem Bremsstempel (32) seitlich auskragenden Bremsbacken (38) ausgebildet sind.

3. Zwillingsrolle, insbesondere nach einem oder mehreren der vorhergehenden Ansprüche, dadurch gekennzeichnet, daß der Bremsstempel (32) durch eine sich auf einer unteren Begrenzungswand (39''') des Durchbruches (39) in dem Träger (3) abstützenden Druckfeder (43) in eine Freigabestellung vorgespannt ist.

4. Zwillingsrolle, insbesondere nach einem oder mehreren der vorhergehenden Ansprüche, dadurch gekennzeichnet, daß an dem Durchbruch (39) seitliche Führungsnasen (39', 39'') ausgebildet sind, die im Einbauzustand mit Halterungsnasen (40, 41, 42) in formschlüssiger Überdeckung sind.

5. Zwillingsrolle, insbesondere nach einem oder mehreren der vorhergehenden Ansprüche, dadurch gekennzeichnet, daß eine obere Stirnfläche des Bremsstempels (32) zur Brems- und Schwenkblockierung von einem Betätigungsstößel (29) beaufschlagbar ist.

6. Zwillingsrolle, insbesondere nach einem oder mehreren der vorhergehenden Ansprüche, dadurch gekennzeichnet, daß die obere Stirnfläche des Bremsstempels (32) und die untere Stirnfläche des Betätigungsstößels (29) zur Schwenkblockierung verzahnt ausgebildet sind.

7. Zwillingsrolle, insbesondere nach einem oder mehreren der vorhergehenden Ansprüche, dadurch gekennzeichnet, daß die Laufräder (1, 2) an ihren einander zugewandten Innenseiten abgestufte Bremsflächenringe (21) ausbilden zur Zusammenwirkung mit den Bremsbacken (38).

8. Zwillingsrolle, insbesondere nach einem oder mehreren der vorhergehenden Ansprüche, gekennzeichnet durch eine auf den Träger (3) aufsteckbare Abdeckung (46), die unterseitig Halterungsvorsprünge (53, 54) ausbildet, welche entlang einer Umfangslinie des im wesentlichen kreisförmig ausgebildeten Trägers (3) beidseitig gegen die Seitenflächen des Trägers (3) treten.

9. Zwillingsrolle, insbesondere nach einem oder mehreren der vorhergehenden Ansprüche, dadurch gekennzeichnet, daß die Abdeckung (46) sich in eine den Montagezapfen (22) umgebende Hülse (48) fortsetzt, die Einstecknuten (55) aufweist zur Halterung einer Montagezapfen-Verkleidung (56).

10. Zwillingsrolle, insbesondere nach Anspruch 9, dadurch gekennzeichnet, daß die Einstecknuten (55) senkrecht verlaufen.

11. Zwillingsrolle, insbesondere nach einem oder mehreren der vorhergehenden Ansprüche, dadurch gekennzeichnet, daß die Achse durch eine zentral in dem Träger (3) aufgenommene Hülse (6) gebildet ist, die jeweils endseitig über ein Wälzlager (8) die Laufräder (1, 2) abstützt.

12. Zwillingsrolle, insbesondere nach einem oder mehreren der vorhergehenden Ansprüche, dadurch gekennzeichnet, daß eine Montageöffnung (12) in einer äußeren Laufradwand (11) durch einen radial gerichteten Verschlußdekkel (13) abgedeckt ist, der einen zentralen Klipskragen (15) und einen hierzu radial versetzten Klipskragen (16) zur Halterung an der Laufradwand (11) ausbildet.

13. Zwillingsrolle, insbesondere nach einem oder mehreren der vorhergehenden Ansprüche, dadurch gekennzeichnet, daß der Verschlußdeckel (13) ebenflächig in die äußere Laufradwand (11) übergeht.

14. Zwillingsrolle, insbesondere nach einem oder mehreren der vorhergehenden Ansprüche, dadurch gekennzeichnet, daß der von einem Felgenbett (19) der Laufradwand (11) aufgenommene Laufflächenring (20) sich unter Ausbildung einer Stufe in den Bremsflächenring (21) fortsetzt.

15. Zwillingsrolle, insbesondere nach einem oder mehreren der vorhergehenden Ansprüche, dadurch gekennzeichnet, daß eine Bodenfläche (19') des Felgenbettes (19) konisch, sich nach außen vergrößernd verläuft.

16. Zwillingsrolle, insbesondere nach einem oder mehreren der vorhergehenden Ansprüche, dadurch gekennzeichnet, daß die Stößelstirnfläche (31) ganzflächig auf einer geschlossenen Kreisringfläche mit dem Zahnkranz (34) des Bremsstempels in Eingriff tritt.

## Claims

1. Twin roll, in particular guide roll, with a carrier (3), running wheels (1, 2) and a vertical mounting journal (22), wherein the running wheels (1, 2) are mounted on the carrier (3) by means of a shaft (6) and the carrier (3) supports the mouting journal (22) and wherein furthermore on the carrier (3) is disposed a brake element (32), characterised in that the carrier (3) is disc-shaped and comprises a aperture (39) for lateral insertion, in the form of a rear tommy bar connection, of the brake element constructed as a brake plunger (32).

2. Twin roll, in particular according to claim 1, characterised in that laterally projecting brake shoes (38) are formed on the brake plunger (32).

3. Twin roll, in particular according to one or more of the preceding claims, characterised in that the brake plunger (32) is biassed into a released position by a compression spring (43) which is supported on a lower boundary wall (39''') of the aperture (39) in the carrier (3).

4. Twin roll, in particular according to one or more of the preceding claims, characterised in that in the aperture (39) are formed lateral guide lugs (39', 39'') which in the assembled state overlap in form-locking relationship with support lugs (40, 41, 42).

5. Twin roll, in particular according to one or more of the preceding claims, characterised in that an upper end face of the brake plunger (32) can be acted upon by an actuating ram (29) to prevent braking and pivoting.

6. Twin roll, in particular according to one or more of the preceding claims, characterised in that the upper end face of the brake plunger (32) and the lower end face of the actuating ram (29) have interlocking teeth to prevent pivoting.

7. Twin roll, in particular according to one or more of the preceding claims, characterised in that the running wheels (1, 2) form braking surface rings (21) which are stepped on their inner sides facing towards each other, for cooperation with the brake shoes (38).

8. Twin roll, in particular according to one or more of the preceding claims, characterised by a cover (46) which can be fitted onto the carrier (3) and which on the lower side forms support projections (53, 54) which along a circumferential line of the essentially circular carrier (3) meet the side surfaces of the carrier (3) on both sides.

9. Twin roll, in particular according to one or more of the preceding claims, characterised in that the cover (46) continues into a sleeve (48) which surrounds the mounting journal (22) and which comprises insertion grooves (55) for supporting a mounting journal casing (56).

10. Twin roll, in particular according to claim 9, characterised in that the insertion grooves (55) extend vertically.

11. Twin roll, in particular according to one or more of the preceding claims, characterised in that the shaft is formed by a bush (6) held centrally in the carrier (3) and supporting the running wheels (1, 2) at each end by a rolling bearing (8).

12. Twin roll, in particular according to one or more of the preceding claims, characterised in that an assembly opening (12) in an outer running wheel wall (11) is covered by a radially extending closure cover (13) which forms a central snap-fit collar (15) and a snap-fit collar (16) radially offset therefrom for support on the running wheel wall (11).

13. Twin roll, in particular according to one or more of the preceding claims, characterised in that the closure cover (13) merges in plane relationship into the outer running wheel wall (11).

14. Twin roll, in particular according to one or more of the preceding claims, characterised in that the running surface ring (20), which is held by a rim base (19) of the running wheel wall (11), continues into the braking surface ring (21), forming a step.

15. Twin roll, in particular according to one or more of the preceding claims, characterised in that a bottom surface (19') of the rim base (19) extends conically, diverging outwardly.

16. Twin roll, in particular according to one or more of the preceding claims, characterised in that the end face (31) of the ram engages with the toothed rim (34) of the brake plunger over the whole of a closed annular surface.

## Revendications

1. Roulette jumelée, en particulier roulette orientable comprenant un support (3), des roues de roulement (1, 2) et un tourillon de montage surélevé (22), dans laquelle les roues de roulement (1, 2) sont fixées par un axe (6) au support (3), lequel s'appuie sur le tourillon de montage (22) et dans laquelle un élément de freinage (32) est en outre adjoint au support (3), caractérisée en ce que le support (3) est réalisé en forme de disque et présente une découpe (39) pour insérer latéralement sous la forme d'une liaison par enfichage et prise arrière l'élément de freinage réalisé sous la forme d'un tampon de freinage (32).

2. Roulette jumelée, en particulier selon la revendication 1, caractérisée en ce que le tampon de freinage (32) comporte des mâchoires de frein (38) faisant saillie latéralement.

3. Roulette jumelée, en particulier selon une ou plusieurs des revendications précédentes, caractérisée en ce que le tampon de freinage (32) est sollicité en permanence vers une position de libération par un ressort de compression (43) s'appuyant sur une paroi intérieure de délimitation (39''') de la découpe (39) dans le support (3).

4. Roulette jumelée, en particulier selon une ou plusieurs des revendications précédentes, caractérisée en ce qu'elle comporte sur la découpe (39) des becs de guidage latéraux (39', 39'') qui, en position de montage, viennent recouvrir avec ajustement de forme des becs de support (40, 41, 42).

5. Roulette jumelée, particulièrement selon une ou plusieurs des revendications précédentes, caractérisée en ce qu'une surface frontale supérieure du tampon de freinage (32) est susceptible d'être actionnée par un poussoir d'actionnement (29) pour assurer le blocage par freinage et au pivotement.

6. Roulette jumelée, en particulier selon une ou plusieurs des revendications précédentes, caractérisé en ce que les surfaces frontales supérieure du tampon de freinage (32) et les surfaces frontales inférieure du poussoir (29) d'actionnement sont munies de denture pour le blocage au pivotement.

7. Roulette jumelée, en particulier selon une ou plusieurs des revendications précédentes, caractérisée en ce que les roues de roulement (1, 2) présentent, sur leurs faces en regard, des anneaux de surfaces en gradins (21), destinés à coopérer avec les mâchoires de frein (38).

8. Roulette jumelée, en particulier selon une ou plusieurs des revendications précédentes, caractérisée par un recouvrement (46) enfichable sur le support (3) qui présente des saillies de fixation par en-dessous (53, 54), qui sont engagées sur une ligne périphérique du support (3) sensiblement cruciforme des deux côtés contre les surfaces latérales du support (3).

9. Roulette jumelée, en particulier selon une ou plusieurs des revendications précédentes, caractérisée en ce que le recouvrement (46) se prolonge par une douille (48) entourant le tourillon de montage (22) et présentant des rainures d'enfichage (55) pour la fixation d'un capot (56) du tourillon de montage.

10. Roulette jumelée, en particulier selon la revendication 9, caractérisée en ce que les rainures d'enfichage (55) se développent perpendiculairement.

11. Roulette jumelée, en particulier selon une ou plusieurs des revendications précédentes, caractérisée en ce que l'axe est constitué d'une douille (6) logée au centre du support (3) et qui supporte, à chaque extrémité, par un palier à roulement (8), la roue de roulement (1, 2).

12. Roulette jumelée, en particulier selon une ou plusieurs des revendications précédentes, caractérisée en ce qu'une ouverture de montage (12), dans une paroi extérieure (11) de roue de roulement, est recouverte, dans le sens radial, par un couvercle de fermeture (13) qui forme un collet central d'encliquetage (15) et un collet d'encliquetage (16) décalé radialement par rapport au précédent pour la fixation sur la paroi (11) de la roue de roulement.

13. Roulette jumelée, en particulier selon une ou plusieurs des revendications précédentes, caractérisée en ce que le couvercle de fermeture (13) est plan et prolonge la paroi extérieure de la roue (11).

14. Roulette jumelée, en particulier selon une ou plusieurs des revendications précédentes, caractérisée en ce que l'anneau de surface de roulement (20), fixé à demeure par une base de jante (19) de la roue de roulement (11), se prolonge jusqu'à l'anneau de surface de freinage (21) en formant un gradin.

15. Roulette jumelée, en particulier selon une ou plusieurs des revendications précédentes, caractérisée en ce qu'une surface de fonc (19') de la base de jante (19) est conique en s'élargissant vers l'extérieur.

16. Roulette jumelée, en particulier selon une ou plusieurs des revendications précédentes, caractérisée en ce que la surface frontale (31) du poussoir vient en contact sur la totalité de sa superficie et sur une surface annulaire circulaire fermée avec la couronne dentelée (34) du tampon de freinage.
